# EUROPEAN PATENT SPECIFICATION

(11) **EP 4 606 231 B1**
(45) Date of publication and mention of the grant of the patent: **13.05.2026**
(21) Application number: 25154399.7
(22) Date of filing: 28.01.2025
(51) Int. Cl.: A23P 30/20, A23L 11/00, A23J 3/26

(54) **PROCESS AND APPARATUS FOR PRODUCING SNACKS**
VERFAHREN UND VORRICHTUNG ZUR HERSTELLUNG VON SNACKS
PROCÉDÉ ET APPAREIL POUR LA PRODUCTION DE SNACKS

(30) Priority: 21.02.2024 IT 202400003625
(43) Date of publication of application: 27.08.2025
(73) Proprietor: Pavan S.p.A., 35015 Galliera Veneta (PD) (IT)
(72) Inventor: FERRACIN, Guglielmo, 35100 Padova (IT); DI NUNNO, Davide, 31033 Castelfranco Veneto (Padova) (IT)
(74) Representative: Dondi, Silvia

(56) References cited:
- EP-B1- 2 725 924
- WO-A1-2020/092306
- WO-A2-2008/077052
- WO-A2-2009/129024
- WO-A2-2011/011456
- US-B1- 6 274 189

## Description

The present invention relates to a process and apparatus for producing snacks.

In particular, the invention finds application in food industry, where it is felt the need to produce healthier products.

On the market there is an assorted offer of puffed snacks. These snacks have a relative low content of proteins (usually no more than 60%).

There are already known products showing higher content of proteins and grains due to their beneficial health properties.

For example, document EP 2725924 B1 discloses a method for preparing extruded legume micro pellets. In fact, legumes are recognized as meeting the challenges of healthy diets.

The method according to document EP 2725924 B1 comprises steps of preconditioning, extruding, cutting, and drying a legume flour-based mixture. The legume micro pellets so obtained contain 70 % to 90% legumes, have a moisture content of 8 & to 12% and a density of 700 to 850 g/L.

Other known processes for extruding legume micro pellets are shown in WO 2011/011456 A2 and US 6 274 189 B1.

There is still felt the need to produce snacks which are even healthier and exhibit better aroma and texture properties than prior art snacks.

In this context, the technical task at the basis of the present invention is to propose a process and apparatus for producing snacks, which overcome the above-mentioned drawbacks of the prior art.

The stated technical task and specified objects are substantially achieved by a process for producing snacks, the process comprising the steps of:
- dosing a pre-established amount of plant protein isolate or concentrate in powder;
- adding a pre-established amount of water to the pre-established amount of plant protein isolate or concentrate so as to obtain a hydrated mixture;
- mixing the hydrated mixture so as to obtain a dough;
- vaporizing the dough;
- force-feeding the dough into a first screw conveyor;
- extruding the dough in a second screw conveyor;
- forcing the dough into a die so as to provide elongated strings;
- cutting the elongated strings into a plurality of snacks;
- toasting the snacks.

According to a preferred embodiment, the step of vaporizing takes place before the step of extruding.

According to one embodiment, the step of adding a pre-established amount of water to the pre-established amount of plant protein isolate or concentrate takes place in a twin shaft pre-mixer.

In particular, the step of mixing has a duration of 3 minutes to 8 minutes.

According to one embodiment, the step of mixing takes place in a single shaft mixer.

Preferably, in step of toasting the snacks are subject to at least one air flow having a temperature comprised between 100°C and 300°C.

More preferably, in step of toasting the snacks are subject to at least one air flow having a temperature comprised between 150°C and 250°C.

For example, the plant protein isolate or concentrate is one of the following: pea protein isolate, soy protein isolate, lentil protein isolate, fava beans isolate, chickpea isolate.

Preferably, the pre-established amount of plant protein isolate and the pre-established amount of water are in a ratio of 30%- 15%.

More preferably, the pre-established amount of plant protein isolate and the pre-established amount of water are in a ratio of 23% - 18%.

According to one embodiment, the plant protein isolate has a percentage of protein of 80% or more.

According to another embodiment, the plant protein concentrate has a percentage of protein comprised between 50% and 80%.

The stated technical task and specified objects are substantially achieved by an apparatus for producing snacks according to the proposed process.

The apparatus comprises:
- a doser for dosing a pre-established amount of plant protein isolate or concentrate in powder;
- a twin shaft pre-mixer where water is added, the twin shaft pre-mixer being arranged downstream the doser;
- a single shaft mixer configured to mix and add vapor to the hydrated mixture so as to obtain a dough, said single shaft mixer being arranged downstream the twin shaft pre-mixer;
- a first screw conveyor configured to force-feeding the dough, said first screw conveyor being arranged downstream the single shaft mixer;
- a second screw conveyor for extruding the dough, said second screw conveyor being arranged downstream the first screw conveyor;
- a die arranged downstream the second screw conveyor so as to receive the dough and provide elongated strings;
- cutting means arranged downstream said die and being configured to cut the elongated strings into a plurality of snacks;
- a toasting chamber configured to toast the snacks.

Preferably, the doser is a gravimetric doser.

According to one embodiment of the invention, the first screw conveyor has a longitudinal axis that is substantially orthogonal to a longitudinal axis of the second screw conveyor.

According to one embodiment of the invention, the second screw conveyor is a twin screw.

Preferably, the apparatus further comprises:
- conveying means arranged downstream the cutting means and configured to receive the snacks from the cutting means;
- a steel tube arranged downstream the conveying means and upstream the toasting chamber.

Further characteristics and advantages of the present invention will more fully emerge from the non-limiting description of a preferred but not exclusive embodiment of a process and apparatus for producing snacks, as depicted in the attached figures:
- figure 1 illustrates the flowchart of a process for producing snacks, according to the present invention;

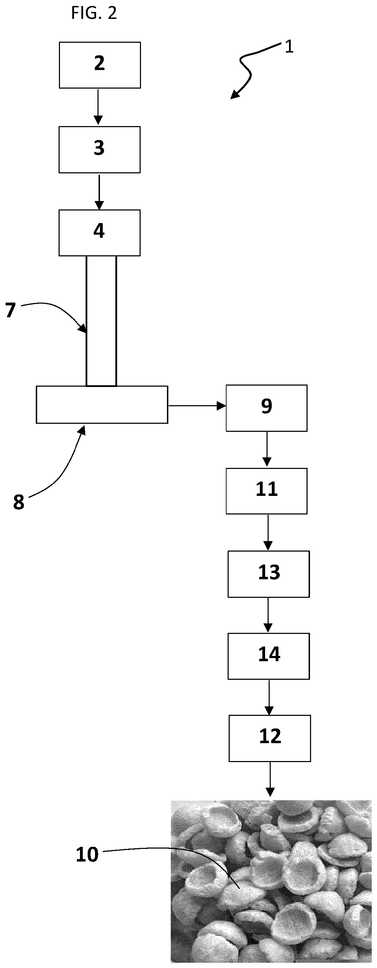

- figure 2 illustrates a block diagram of an apparatus for producing snacks, according to the present invention.

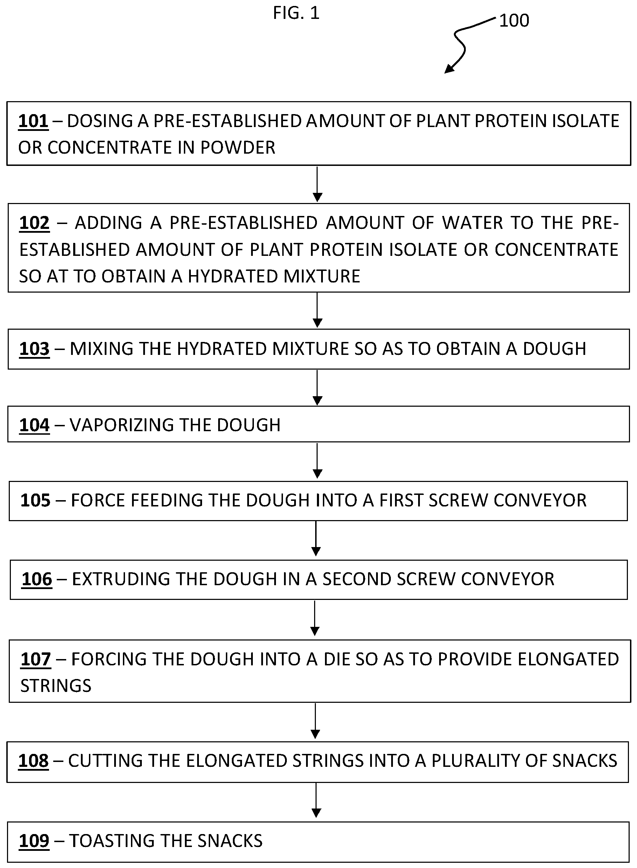

With reference to figure 1, reference numeral 100 indicates a process for producing snacks 10.

The process 100 starts with a step of dosing a pre-established amount of plant protein isolate or concentrate in powder. This step is illustrated by block 101.

In one embodiment of the invention, the plant protein isolate has a high percentage of proteins, usually higher than 80%.

For example, the plant protein isolate is based on legumes.

Preferably, the plant protein isolate is pea protein isolate.

Alternatively, the plant protein isolate is chosen among one of the followings: soy protein isolate, lentil protein isolate, fava beans isolate, chickpea isolate.

In another embodiment, the plant protein concentrate has a percentage of protein comprised between 50% and 80%.

For example, the plant protein concentrate is based on legumes.

Preferably, the plant protein concentrate is pea protein concentrate.

Analogously to the isolate, also the concentrate may be chosen among the following: soy protein isolate, lentil protein isolate, fava beans isolate, chickpea isolate.

In one embodiment of the invention, the plant protein isolate or concentrate is mixed with legume flour. The percentage of isolate / concentrate and flour in the mixture may vary from a balanced ratio (1:1) to other ratios.

According to a preferred embodiment, the step of dosing 101 takes place by means of a gravimetric doser 2, which doses the plant protein isolate (or concentrate or mixture).

The process 100 continues with a step of adding a pre-established amount of water to the pre-established amount of plant protein isolate (or concentrate or mixture) so as to obtain a hydrated mixture. This step is illustrated by block 102 and is carried out in a twin shaft pre-mixer 3.

Preferably, the pre-established amount of plant protein isolate and the pre-established amount of water are in a ratio of 30%- 15%.

More preferably, the pre-established amount of plant protein isolate and the pre-established amount of water are in a ratio of 23% - 18%.

Changing the ratio allows to obtain snacks having different alveolar structure, depending on the needs.

The hydrated mixture is then subject to a step of mixing so as to obtain a dough. This step is illustrated by block 103.

For example, the step of mixing 103 has a duration of 3 minutes to 8 minutes.

Advantageously, the process 100 comprises a step of vaporizing the dough, indicated as 104.

Preferably, the step of vaporizing 104 comprises adding vaporized water to the hydrated mixture.

Advantageously, the step of vaporizing 104 allows to increase hydration.

According to one embodiment, shown in figure 1, the step of vaporizing 104 takes place before a step of extruding, indicated as 105.

Preferably, the step of mixing 103 and the step of vaporizing 104 take place in a single shaft mixer 4. The dough is then subject to a step of force-feeding into a first screw conveyor 7.

The step of force-feeding is illustrated by block 105.

The dough is then subject to a step of extruding, illustrated by block 106.

The step of extruding 106 is carried out in a second screw conveyor 8 where the dough is transported and cooked.

In particular, the second screw conveyor 8 is arranged below the first screw conveyor 7. Preferably, the second screw conveyor 8 has a longitudinal axis which extends horizontally, whereas the first screw conveyor 7 has a longitudinal axis which extends vertically.

In other words, the first screw conveyor 7 is substantially orthogonal to the second screw conveyor 8.

Preferably, the second screw conveyor 8 is a twin screw.

In an alternative embodiment, the step of vaporizing 105 takes place during the extrusion 104.

The dough exiting the second screw conveyor 8 is then forced into a die 9 that gives the shape to the dough. In particular, the die provides elongated strings of dough. This step of forcing the dough into a die is illustrated by block 107.

The elongated strings are cut into a plurality of snacks 10. This step is illustrated by block 108 and is carried out by cutting means 11 of the known type. Preferably, the cutting means 11 are arranged immediately downstream the die 9. In particular, the cutting means 11 are in contact with the die 9.

Advantageously, the snacks 10 are toasted in a toasting chamber 12. This step is illustrated by block 109.

In particular, after cutting the snacks 10 are discharged on conveying means 13 (for example comprising a pneumatic conveyor), pass through a steel tube 14 and arrive at the toasting chamber 12.

Preferably, in the toasting chamber 12 the snacks 10 are subject to at least one air flow having a temperature comprised between 100°C and 300°C. More preferably, the temperature is comprised between 150°C and 250°C. In one embodiment, the snacks 10 are subject to two air flows in the toasting chamber 12. In particular, the snacks 10 are subject to an upper air flow and a lower air flow.

The step of toasting 109 serves for lowering the humidity level, which drops to 4% - 8%.

At the end of toasting 109, the snacks 10 are ready.

Figure 1 schematically illustrates an apparatus 1 for producing snacks 10 according to the proposed process 100.

The apparatus 1 comprises a doser 2 for dosing a pre-established amount of plant protein isolate or concentrate in powder. Preferably, the doser 2 is a gravimetric doser 2.

The apparatus 1 further comprises a twin shaft pre-mixer 3 arranged downstream the doser 2 where water is added to the isolate or concentrate so as to obtain a hydrated mixture.

In this context, the term "downstream" is referred to the flow of the product while being produced, from the initial ingredients to the final snacks 10.

The apparatus 1 further comprises a single shaft mixer 4 where the hydrated mixture is mixed and where vaporized water is added. In the single shaft mixer 4 it is obtained the dough.

The apparatus 1 further comprises a first screw conveyor 7 for force-feeding the dough. The first screw conveyor 7 is arranged downstream the single shaft mixer 4.

Downstream the first screw conveyor 7 there is a second screw conveyor 8 of the apparatus 1.

Preferably, the second screw conveyor 8 is a twin screw which is configured to extrude the dough in order to cook it.

The apparatus 1 further comprises a die 9 arranged downstream the second screw conveyor 8 so as to receive the dough and provide elongated strings.

The apparatus 1 further comprises cutting means 11 arranged downstream the die 9, and preferably in contact with it. The cutting means 11 are configured to cut the elongated strings into a plurality of snacks 10. The apparatus 1 further comprises a pneumatic conveyor 13 which receive the snacks 10 from the cutting means 11.

The snacks 10 passes through a steel tube 14 and arrives at a toasting chamber 12 of the apparatus 1.

The toasting chamber 12 is configured to toast the snacks 10.

Preferably, in the toasting chamber 12 the snacks 10 are subject to at least one air flow having a temperature comprised between 100°C and 300°C.

More preferably, the temperature is comprised between 150°C and 250°C.

In one embodiment, the snacks 10 are subject to two air flows in the toasting chamber 12. In particular, the snacks 10 are subject to an upper air flow and a lower air flow.

The characteristics of the process and apparatus for producing snacks, according to the present invention, are clear, as are the advantages.

The snacks obtained by the proposed process are similar to puffed snacks, as they are puffed thanks to the energy generated by the extrusion step.

The proposed process does not comprise a step of frying, therefore resulting in healthier snacks.

Furthermore, starting from plant protein isolate or concentrate, the protein content of the snacks obtained with the proposed process is higher than in known solutions, reaching 80% or more, which cannot be obtained in puffed snacks.

The snacks obtained by the proposed process have an amplified aroma, meaning that the aroma is better perceived during chewing, and they do not exhibit an uncooked taste, unlike some prior art snacks.

In addition, the snacks obtained by the proposed process are less crispy and more soluble thanks to the high protein content.

Therefore, the snacks obtained by the proposed process are healthier than puffed snacks.

## Claims

1. A process (100) for producing snacks, said process (100) comprising the steps of:
- dosing (101) a pre-established amount of plant protein isolate or concentrate in powder;
- adding (102) a pre-established amount of water to the pre-established amount of plant protein isolate or concentrate so as to obtain a hydrated mixture;
- mixing (103) the hydrated mixture so as to obtain a dough;
- vaporizing (104) the dough;
- force-feeding (105) the dough into a first screw conveyor;
- extruding (106) the dough in a second screw conveyor;
- forcing (107) said dough into a die so as to provide elongated strings;
- cutting (108) the elongated strings into a plurality of snacks;
- toasting (109) the snacks.

2. The process (100) according to any one of the preceding claims, wherein the step of vaporizing (104) takes place before the step of extruding (106).

3. The process (100) according to any one of the preceding claims, wherein the step of adding (102) a pre-established amount of water to the pre-established amount of plant protein isolate or concentrate takes place in a twin shaft pre-mixer (3).

4. The process (100) according to any one of the preceding claims, wherein the step of mixing (103) has a duration of 3 minutes to 8 minutes.

5. The process (100) according to any one of the preceding claims, wherein the step of mixing (103) takes place in a single shaft mixer (4).

6. The process (100) according to any one of the preceding claims, wherein in step of toasting (109) the snacks are subject to at least one air flow having a temperature comprised between 100°C and 300°C.

7. The process (100) according to claim 6, wherein in step of toasting (109) the snacks are subject to at least one air flow having a temperature comprised between 150°C and 250°C.

8. The process (100) according to any one of the preceding claims, wherein said plant protein isolate or concentrate is one of the following: pea protein isolate, soy protein isolate, lentil protein isolate, fava beans isolate, chickpea isolate.

9. The process (100) according to any one of the preceding claims, wherein the pre-established amount of plant protein isolate and the pre-established amount of water are in a ratio of 30%- 15%.

10. The process (100) according to claim 9, wherein the pre-established amount of plant protein isolate and the pre-established amount of water are in a ratio of 23% - 18%.

11. The process (100) according to any one of the claims 1 to 10, wherein the plant protein isolate has a percentage of protein of 80% or more.

12. The process (100) according to any one of the claims 1 to 8, wherein the plant protein concentrate has a percentage of protein comprised between 50% and 80%.

13. An apparatus (1) for producing snacks (10) according to the process (100) of claims 1 to 12, said apparatus (1) comprising:
- a doser (2) for dosing a pre-established amount of plant protein isolate or concentrate in powder;
- a twin shaft pre-mixer (3) where water is added, said twin shaft pre-mixer (3) being arranged downstream the doser (2);
- a single shaft mixer (4) configured to mix and add vapor to the hydrated mixture so as to obtain a dough, said single shaft mixer (4) being arranged downstream the twin shaft pre-mixer (3);
- a first screw conveyor (7) configured to force-feeding the dough, said first screw conveyor (7) being arranged downstream the single shaft mixer (4);
- a second screw conveyor (8) for extruding the dough, said second screw conveyor (8) being arranged downstream the first screw conveyor (7);
- a die (9) arranged downstream the second screw conveyor (8) so as to receive the dough and provide elongated strings;
- cutting means (11) arranged downstream said die (9) and being configured to cut the elongated strings into a plurality of snacks (10);
- a toasting chamber (12) configured to toast the snacks (10).

14. The apparatus (1) according to claim 13, wherein the doser (2) is a gravimetric doser.

15. The apparatus (1) according to claim 13 or 14, wherein the first screw conveyor (7) has a longitudinal axis that is substantially orthogonal to a longitudinal axis of the second screw conveyor (8).

16. The apparatus (1) according to any one of claims 13 to 15, wherein the second screw conveyor (8) is a twin screw.

17. The apparatus (1) according to any one of claims 13 to 16, further comprising:
- conveying means (13) arranged downstream the cutting means (11) and configured to receive the snacks (10) from the cutting means (11);
- a steel tube (14) arranged downstream the conveying means (13) and upstream the toasting chamber (12).

## Patentansprüche

1. Verfahren (100) zur Herstellung von Snacks, wobei das Verfahren (100) die folgenden Schritte umfasst:
- Dosieren (101) einer im Vorfeld festgelegten Menge eines pflanzlichen Proteinisolats oder -konzentrats in Pulverform;
- Hinzufügen (102) einer im Vorfeld festgelegten Menge von Wasser zu der im Vorfeld festgelegten Menge eines pflanzlichen Proteinisolats oder -konzentrats, sodass eine hydratisierte Mischung erhalten wird;
- Vermischen (103) der hydratisierten Mischung, sodass ein Teig erhalten wird;
- Verdampfen (104) des Teigs;
- forciertes Zuführen (105) des Teigs in einen ersten Schneckenförderer;
- Extrudieren (106) des Teigs in einem zweiten Schneckenförderer;
- Pressen (107) des Teigs in eine Matrize, sodass längliche Stränge bereitgestellt werden;
- Schneiden (108) der länglichen Stränge in eine Vielzahl von Snacks;
- Rösten (109) der Snacks.

2. Verfahren (100) nach einem der vorhergehenden Ansprüche, wobei der Schritt zum Verdampfen (104) vor dem Schritt zum Extrudieren (106) erfolgt.

3. Verfahren (100) nach einem der vorhergehenden Ansprüche, wobei der Schritt zum Hinzufügen (102) einer im Vorfeld festgelegten Menge von Wasser zu der im Vorfeld festgelegten Menge eines pflanzlichen Proteinisolats oder -konzentrats in einem Zweiwellenvormischer (3) erfolgt.

4. Verfahren (100) nach einem der vorhergehenden Ansprüche, wobei der Schritt zum Vermischen (103) eine Dauer von 3 Minuten bis 8 Minuten aufweist.

5. Verfahren (100) nach einem der vorhergehenden Ansprüche, wobei der Schritt zum Vermischen (103) in einem Einzelwellenmischer (4) erfolgt.

6. Verfahren (100) nach einem der vorhergehenden Ansprüche, wobei die Snacks im Schritt zum Rösten (109) zumindest einem Luftstrom unterzogen werden, der eine Temperatur zwischen 100 °C und 300 °C aufweist.

7. Verfahren (100) nach Anspruch 6, wobei die Snacks im Schritt zum Rösten (109) zumindest einem Luftstrom unterzogen werden, der eine Temperatur zwischen 150 °C und 250 °C aufweist.

8. Verfahren (100) nach einem der vorhergehenden Ansprüche, wobei das pflanzliche Proteinisolat oder - konzentrat eines der folgenden ist: Erbsenproteinisolat, Sojaproteinisolat, Linsenproteinisolat, Ackerbohnenisolat, Kichererbsenisolat.

9. Verfahren (100) nach einem der vorhergehenden Ansprüche, wobei die im Vorfeld festgelegte Menge von pflanzlichem Proteinisolat und die im Vorfeld festgelegte Menge von Wasser in einem Verhältnis von 30 % bis 15 % sind.

10. Verfahren (100) nach Anspruch 9, wobei die im Vorfeld festgelegte Menge von pflanzlichem Proteinisolat und die im Vorfeld festgelegte Menge von Wasser in einem Verhältnis von 23 % bis 18 % sind.

11. Verfahren (100) nach einem der Ansprüche 1 bis 10, wobei das pflanzliche Proteinisolat einen Proteinanteil von 80 % oder mehr aufweist.

12. Verfahren (100) nach einem der Ansprüche 1 bis 8, wobei das pflanzliche Proteinkonzentrat einen Proteinanteil zwischen 50 % und 80 % aufweist.

13. Vorrichtung (1) zur Herstellung von Snacks (10) gemäß dem Verfahren (100) nach den Ansprüchen 1 bis 12, wobei die Vorrichtung (1) Folgendes umfasst:
- einen Dosierer (2) zum Dosieren einer im Vorfeld festgelegten Menge eines pflanzlichen Proteinisolats oder -konzentrats in Pulverform;
- einen Zweiwellenvormischer (3), in dem Wasser hinzugefügt wird, wobei der Zweiwellenvormischer (3) stromabwärts des Dosierers (2) angeordnet ist;
- einen Einzelwellenmischer (4), der ausgelegt ist, um die hydratisierte Mischung zu vermischen und dieser Dampf hinzuzufügen, sodass ein Teig erhalten wird, wobei der Einzelwellenmischer (4) stromabwärts des Zweiwellenvormischers (3) angeordnet ist;
- einen ersten Schneckenförderer (7), der ausgelegt ist, um den Teig forciert zuzuführen, wobei der erste Schneckenförderer (7) stromabwärts des Einzelwellenmischers (4) angeordnet ist;
- einen zweiten Schneckenförderer (8) zum Extrudieren des Teigs, wobei der zweite Schneckenförderer (8) stromabwärts des ersten Schneckenförderers (7) angeordnet ist;
- eine Matrize (9), die stromabwärts des zweiten Schneckenförderers (8) angeordnet ist, um den Teig aufzunehmen und längliche Stränge bereitzustellen;
- Schneidmittel (11), die stromabwärts der Matrize (9) angeordnet und ausgelegt sind, um die länglichen Stränge in eine Vielzahl von Snacks (10) zu schneiden;
- eine Röstkammer (12), die ausgelegt ist, um die Snacks (10) zu rösten.

14. Vorrichtung (1) nach Anspruch 13, wobei der Dosierer (2) ein gravimetrischer Dosierer ist.

15. Vorrichtung (1) nach Anspruch 13 oder 14, wobei der erste Schneckenförderer (7) eine Längsachse aufweist, die im Wesentlichen orthogonal zu einer Längsachse des zweiten Schneckenförderers (8) verläuft.

16. Vorrichtung (1) nach einem der Ansprüche 13 bis 15, wobei der zweite Schneckenförderer (8) ein Doppelschneckenförderer ist.

17. Vorrichtung (1) nach einem der Ansprüche 13 bis 16, ferner umfassend:
- Fördermittel (13), die stromabwärts der Schneidmittel (11) angeordnet und ausgelegt sind, um die Snacks (10) von den Schneidmitteln (11) aufzunehmen;
- ein Stahlrohr (14), das stromabwärts der Fördermittel (13) und stromaufwärts der Röstkammer (12) angeordnet ist.

## Revendications

1. Procédé (100) pour la production de snacks, ledit procédé (100) comprenant les étapes de :
- doser (101) une quantité préétablie d'isolat ou de concentré protéique végétal en poudre ;
- ajouter (102) une quantité préétablie d'eau à la quantité préétablie d'isolat ou de concentré protéique végétal de manière à obtenir un mélange hydraté ;
- mélanger (103) le mélange hydraté de manière à obtenir une pâte ;
- vaporiser (104) la pâte ;
- forcer l'alimentation (105) de la pâte dans un premier convoyeur à vis ;
- extruder (106) la pâte dans un second convoyeur à vis ;
- forcer (107) ladite pâte dans une filière de manière à fournir des ficelles allongées ;
- couper (108) les ficelles allongées en une pluralité de snacks ;
- griller (109) les snacks.

2. Procédé (100) selon l'une quelconque des revendications précédentes, dans lequel l'étape de vaporiser (104) a lieu avant l'étape d'extruder (106).

3. Procédé (100) selon l'une quelconque des revendications précédentes, dans lequel l'étape d'ajouter (102) une quantité préétablie d'eau à la quantité préétablie d'isolat ou de concentré protéique végétal a lieu dans un prémélangeur à deux arbres (3).

4. Procédé (100) selon l'une quelconque des revendications précédentes, dans lequel l'étape de mélanger (103) a une durée de 3 minutes à 8 minutes.

5. Procédé (100) selon l'une quelconque des revendications précédentes, dans lequel l'étape de mélanger (103) a lieu dans un mélangeur à arbre unique (4).

6. Procédé (100) selon l'une quelconque des revendications précédentes, dans lequel, lors de l'étape de griller (109), les snacks sont soumis à au moins un flux d'air ayant une température comprise entre 100°C et 300°C.

7. Procédé (100) selon la revendication 6, dans lequel, lors de l'étape de griller (109), les snacks sont soumis à au moins un flux d'air ayant une température comprise entre 150°C et 250°C.

8. Procédé (100) selon l'une quelconque des revendications précédentes, dans lequel ledit isolat ou concentré protéique végétal est l'un des suivants : isolat de protéine de pois, isolat de protéine de soja, isolat de protéine de lentille, isolat de fève, isolat de pois chiche.

9. Procédé (100) selon l'une quelconque des revendications précédentes, dans lequel la quantité préétablie d'isolat protéique végétal et la quantité préétablie d'eau sont dans un rapport de 30 % à 15 %.

10. Procédé (100) selon la revendication 9, dans lequel la quantité préétablie d'isolat protéique végétal et la quantité préétablie d'eau sont dans un rapport de 23 % à 18 %.

11. Procédé (100) selon l'une quelconque des revendications 1 à 10, dans lequel l'isolat protéique végétal a un pourcentage de protéine de 80 % ou plus.

12. Procédé (100) selon l'une quelconque des revendications 1 à 8, dans lequel le concentré protéique végétal a un pourcentage de protéines compris entre 50 % et 80 %.

13. Appareil (1) pour la production de snacks (10) selon le procédé (100) selon les revendications 1 à 12, ledit appareil (1) comprenant :
- un doseur (2) pour doser une quantité préétablie d'isolat ou de concentré protéique végétal en poudre ;
- un prémélangeur à deux arbres (3) où de l'eau est ajoutée, ledit prémélangeur à deux arbres (3) étant agencé en aval du doseur (2) ;
- un mélangeur à arbre unique (4) configuré pour mélanger et ajouter de la vapeur au mélange hydraté de manière à obtenir une pâte, ledit mélangeur à arbre unique (4) étant agencé en aval du pré-mélangeur à deux arbres (3) ;
- un premier convoyeur à vis (7) configuré pour forcer l'alimentation de la pâte, ledit premier convoyeur à vis (7) étant agencé en aval du mélangeur à arbre unique (4) ;
- un second convoyeur à vis (8) pour extruder la pâte, ledit second convoyeur à vis (8) étant disposé en aval du premier convoyeur à vis (7) ;
- une filière (9) agencée en aval du second convoyeur à vis (8) de manière à recevoir la pâte et à fournir des ficelles allongées ;
- des moyens de coupe (11) agencés en aval de ladite filière (9) et étant configurés pour couper les ficelles allongées en une pluralité de snacks (10) ;
- une chambre de grillage (12) configurée pour griller les snacks (10).

14. Appareil (1) selon la revendication 13, dans lequel le doseur (2) est un doseur gravimétrique.

15. Appareil (1) selon la revendication 13 ou 14, dans lequel le premier convoyeur à vis (7) a un axe longitudinal qui est substantiellement orthogonal à un axe longitudinal du second convoyeur à vis (8).

16. Appareil (1) selon l'une quelconque des revendications 13 à 15, dans lequel le second convoyeur à vis (8) est à vis double.

17. Appareil (1) selon l'une quelconque des revendications 13 à 16, comprenant en outre :
- des moyens de transport (13) agencés en aval des moyens de coupe (11) et configurés pour recevoir les snacks (10) des moyens de coupe (11) ;
- un tube en acier (14) agencé en aval des moyens de transport (13) et en amont de la chambre de grillage (12).
